# EUROPÄISCHE PATENTSCHRIFT

(11) **EP 0 967 536 B1**
(45) Veröffentlichungstag und Bekanntmachung des Hinweises auf die Patenterteilung: **16.07.2003**
(21) Anmeldenummer: 99108481.5
(22) Anmeldetag: 30.04.1999
(51) Int. Cl.: G05D 23/12, F03G 7/06, G05D 23/13, G01K 1/18

(54) **Thermostatdehnstoffelement**
Thermostatic expansion element
Elément d'expansion thermostatique

(30) Priorität: 23.06.1998 AT 108598
(43) Veröffentlichungstag der Anmeldung: 29.12.1999
(73) Patentinhaber: Ideal-Standard GmbH & Co. OHG, 53121 Bonn (DE)
(72) Erfinder: Bergmann, Konrad Dr., 54338 Schweich-Issels (DE)
(74) Vertreter: Grabherr, Claudia, Dipl.Ing.

(56) Entgegenhaltungen:
- WO-A-97/49914
- DE-A- 2 931 682
- GB-A- 1 492 417
- GB-A- 2 074 317
- US-A- 2 907 210
- PATENT ABSTRACTS OF JAPAN vol. 17, no. 66 (P-1484), 9. Februar 1993 (1993-02-09) -& JP 04 274719 A (NTC KOGYO KK), 30. September 1992 (1992-09-30)

## Beschreibung

Die Erfindung betrifft ein Thermostatdehnstoffelement mit zylindrischem Dehnstoffbehälter und einem Einsatz zur Verbesserung der Wärmeleitung.

Thermostate werden zur geregelten Mischung von Heiß- und Kaltwasser eingesetzt. Dabei kommen z.B. Dehnstoffelemente zum Einsatz. Derartige Bauteile haben sich sehr bewährt und zeichnen sich durch große Stellkräfte aus.

Nachteilig ist die für den Anwendungszweck zu große Temperaturzeitkonstante. Das führt dazu, daß bei schnellen Schwankungen des Wasserdruckes die Temperatur des Mischwassers sich fühlbar ändert und bei Verstellen von Kalt nach Warm ein Überschwingen auftritt.

Das ungünstige Zeitverhalten von Dehnstoffelementen ist auf die schlechte Wärmeleitung des Dehnstoffes zurückzuführen, wobei es sich vorzugsweise um Wachse handelt.

Eine Verbesserung der Wärmeleitung und damit der Temperaturzeitkonstante ergibt sich durch Mischung des Dehnstoffes mit Kupferflittern.

Eine weitere Verbesserung schaffen Einsätze in dem Dehnstoffelement, die die Wärme von der äußeren Behälterwand zu mittleren Wachsschichten leiten. In der DE-A-3400699 sind z.B. sternförmige Einsätze aus Blech vorgeschlagen.

Das Dokument DE 29 31 682 A1 zeigt ebenfalls einen relevanten Stand der Technik.

Derartige Einsätze haben aber nur bedingten Wärmeleitkontakt, wenn sie nicht angelötet sind und sind teuer in der Herstellung. Bei länglicher Form des Dehnstoffbehälters ist es üblich die Kalibrierung des Behältervolumens durch Verquetschen der Behälterwand zu bewirken. Dabei können die bekannten sternförmigen Bleche in weiten Teilen von der Behälterwand weggedrückt werden und so ihren Wärmeleitkontakt verlieren. Ferner ist ein sternförmiges Wärmeleitblech um so aufwendiger in der Herstellung je länglicher die Form des Dehnstoffbehälters ist.

Aufgabe der Erfindung ist es eingangsgenannte Thermostatdehnstoffelemente mit Einsätzen zur Verbesserung der Wärmeleitung zu schaffen, die sich für lange, dünne Dehnstoffelemente eignen und verbesserten Wärmekontakt zur Wand des Dehnstoffbehälters aufweisen und billiger in der Herstellung sind.

Erfindungsgemäß wird dies dadurch erreicht, daß der Einsatz ein massives Stegblech ist, das unter Vorspannung in der Längsmittelebene des Dehnstoffbehälters eingesetzt ist. Ein solches Stegblech ist leicht und billig herzustellen und einfach durch Verpressen in den Dehnstoffbehälter einzusetzen. Es verliert auch beim Kalibriern des Dehnstoffbehälters durch Verquetschen den Wärmeleitkontakt mit der Behälterwand nicht.

Vorzugsweise ist durch die Vorspannung des Stegbleches eine Verformung des Dehnstoffbehälter entlang einer seiner Querschnittachsen gegeben, d.h. der ursprünglich kreisförmige Querschnitt wird oval. Unter Druckbelastung der Dehnstofffüllung strebt der Dehnstoffbehälter stets in die kreiszylindrische Form zurück, weshalb sichergestellt ist, daß der Kontakt zwischen Stegblech und Behälterwand aufrecht erhalten bleibt, der für die Wärmeleitung in das Innere des Dehnstoffkernes erforderlich ist.

Das Stärke-Breite-Verhältnis des Stegbleches verhindert ein Beulen des Stegbleches normal zur Längsachse des Dehnstoffbehälters und damit ein unbeabsichtigtes Unterbrechen des Kontaktes zwischen Stegblech und Behälterwand. Vorzugsweise ist dabei die Stärke des Stegbleches größer als ein Zehntel, vorzugsweise größer gleich ein Sechstel des Innendurchmessers des Dehnstoffbehälters. Ein Beulen des Stegbleches normal zur Einbauachse wird dadurch sicher verhindert.

Besteht das Stegblech aus Kupferblech ist eine gute Wärmeleitung gesichert, da sich das weiche Kupferblech beim Einpressen in den Dehnstoffbehälter an dessen Wand durch plastische Verformung gut anpaßt und Kupfer ein guter Wärmeleiter ist.

Sind der Dehnstoffbehälter und das Stegblech konisch ausgebildet, kommt es bei der Montage erst beim vollständigen Ineinanderschieben zum Preßvorgang. Die Montage wird somit erleichtert.

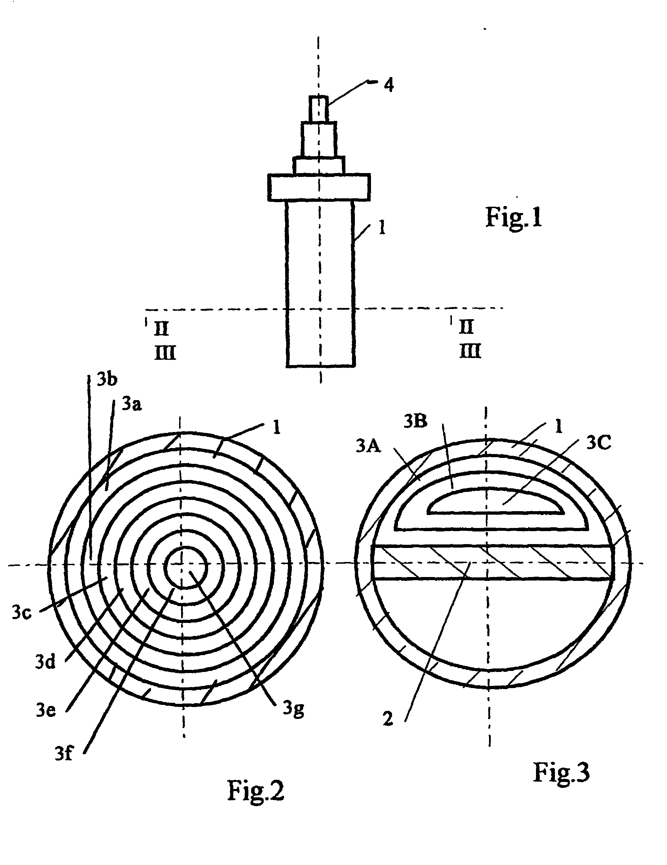

Die Erfindung soll nun noch kurz anhand der beiliegenden Zeichnngen erläutert werden. Fig.1 zeigt ein Thermostatdehnstoffelement in Seitenansicht. Die Fig. 2 und die Fig. 3 zeigen den Schnitt entsprechen II-II bzw. III-III in Fig.1, wobei der Dehnstoffbehälter gemäß Fig.2 keinen Einsatz zur Verbesserung der Wärmeleitung und der Dehnstoffbehälter gemäß Fig.3 ein erfindungsgemäßes Stegblech 2 zur Verbesserung der Wärmeleitung enthalten.

Das Thermostatdehnstoffelement enthält einen Dehnstoffbehälter 1, der z.B. mit Wachs 3 gefüllt ist. Eine Temperaturänderung des mit dem Dehnstoffbehälter 1 in Wärmekontakt stehenden Wassers, bewirkt eine Volumsänderung des Wachses 3, die in eine Longitudinalbewegung eines Stiftes 4 umgesetzt wird. Die Bewegung des Stiftes 4 wird zur Nachregelung der Temperatur verwendet.

Fig.2 zeigt die Wand des Dehnstoffbehälters 1, der mit Wachs 3 gefüllt ist. Die Zeitkonstante der Wärmeleitung im Wachsbehälter kann näherungsweise proportional dem Quadrat des Abstandes zum nähersten guten Wärmeleiter, d.h. in diesem Fall zur Behälterwand 1 angenommen werden. Zur Verdeutlichung des Abstandes zur Behälterwand 1 sind in Fig.2 Wachsschichten 3a bis 3g gleicher Dicke eingezeichnet, wenngleich in der Praxis das Wachs nicht in Schichten angeordnet ist sondern homogen verteilt ist. Den innersten Bereich 3g erreicht die Wärmeänderung des Wassers und damit der Behälterwand aufgrund der schlechten Wärmeleitung des Wachses erst sehr viel später als den äußersten Bereich 3a. Die Zeitkonstante dieses Thermostatdehnstoffelementes ist dementsprechend schlecht.

In Fig.3 ist das Stegblech 2 in den Dehnstoffbehälter so eingesetzt, daß dieser entlang einer Querschnittachse verformt ist und daher eine leicht ovale Form hat. Wiederum ist die Zeitkonstante des Thermostatdehnstoffelementes in etwa proportional zum Quadrat des Abstandes zu guten Wärmeleitern, hier die Behälterwand 1 und das Stegblech 2. Zur Veranschaulichung sind auch hier Wachsschichten 3A, 3B, 3C gleicher Dicke wie in Fig.2 eingezeichnet. Bei gleicher Skalierung der Schichtdicken wie in Fig.2 ergeben sich nur drei Schichten 3A, 3B, 3C bis zum innersten Bereich. Die Erwärmung des Wachses geht also bei der erfindungsgemäßen Ausführung des Thermostatdehnstoffelementes viel rascher vor sich. Das Temperaturzeitverhalten ist signifikant verbessert.

Bei der Kalibrierung des Elementes kann das Stegblech mit verformt werden ohne daß es durch Beulen großflächig ausser Kontakt mit der Innenwand des Dehnstoffbehälters gerät.

Herstellung und Handhabung eines derartigen Stegbleches sind einfach und billig.

## Patentansprüche

1. Thermostatdehnstoffelement mit zylindrischem Dehnstoffbehälter und einem Einsatz zur Verbesserung der Wärmeleitung, **dadurch gekennzeichnet, daß** der Einsatz ein massives Stegblech (2) ist, das unter Vorspannung in der Längsmittelebene des Dehnstoffbehälters (1) eingesetzt ist.

2. Thermostatdehnstoffelement nach Anspruch 1, **dadurch gekennzeichnet, daß** durch die Vorspannung des Stegbleches (2) eine Verformung des Dehnstoffbehälters (1) entlang einer seiner Querschnittachsen gegeben ist.

3. Thermostatdehnstoffelement nach Anspruch 1 oder 2, **dadurch gekennzeichnet, daß** das Stärke-Breite-Verhältnis des Stegbleches (2) ein Beulen des Stegbleches (2) normal zur Längsachse des Dehnstoffbehälters (1) verhindert.

4. Thermostatdehnstoffelement nach Anspruch 3, **dadurch gekennzeichnet, daß** die Stärke des Stegbleches (2) größer als ein Zehntel, vorzugsweise größer gleich ein Sechstel des Innendurchmessers des Dehnstoffbehälters (1) ist.

5. Thermostatdehnstoffelement nach einem der vorhergehenden Ansprüche, **dadurch gekennzeichnet, daß** das Stegblech (2) aus Kupferblech besteht.

6. Thermostatdehnstoffelement nach einem der vorhergehenden Ansprüche, **dadurch gekennzeichnet, daß** der Dehnstoffbehälter (1) und das Stegblech (2) konisch ausgebildet sind.

## Claims

1. Thermostatic expansion element having a cylindrical expansion container and an insert for improving the thermal conduction, **characterised in that** the insert is a solid web plate (2) which is inserted under prestress in the longitudinal central plane of the expansion container (1).

2. Thermostatic expansion element according to claim 1, **characterised in that** by prestressing the web plate (2) the expansion container (1) is deformed along one of its cross-sectional axes.

3. Thermostatic expansion element according to claim 1 or 2, **characterised in that** the strength-width ratio of the web plate (2) prevents the web plate (2) from bulging at right angles to the longitudinal axis of the expansion container (1).

4. Thermostatic expansion element according to claim 3, **characterised in that** the strength of the web plate (2) is greater than one tenth, preferably greater than or equal to one sixth, of the inside diameter of the expansion container (1).

5. Thermostatic expansion element according to one of the preceding claims, **characterised in that** the web plate (2) is made of copper plate.

6. Thermostatic expansion element according to one of the preceding claims, **characterised in that** the expansion container (1) and the web plate (2) are formed in a conical manner.

## Revendications

1. Elément en une substance qui se dilate pour thermostat, comprenant un récipient cylindrique pour la substance qui se dilate et une pièce rapportée pour améliorer la conduction de la chaleur, **caractérisé en ce que** la pièce rapportée est une tôle (2) pleine formant âme qui est insérée avec précontrainte dans le plan médian longitudinal du récipient (1) de la substance qui se dilate.

2. Elément en une substance qui se dilate pour thermostat suivant la revendication 1, **caractérisé en ce que** par la précontrainte de la tôle (2) formant âme il y a, pour le récipient (1) de la substance qui se dilate, une déformation le long de l'un de ses axes de section transversale.

3. Elément en une substance qui se dilate pour thermostat suivant la revendication 1 ou 2, **caractérisé en ce que** le rapport épaisseur-largeur de la tôle (2) formant âme empêche la tôle (2) formant âme de se bosseler normalement à l'axe longitudinal du récipient (1) de la substance qui se dilate.

4. Elément en une substance qui se dilate pour thermostat suivant la revendication 3, **caractérisé en ce que** l'épaisseur de la tôle (2) formant âme est supérieure à un dixième et, de préférence, supérieure ou égale à un sixième du diamètre intérieur du récipient (1) pour la substance qui se dilate.

5. Elément en une substance qui se dilate pour thermostat suivant l'une des revendications précédentes, **caractérisé en ce que** la tôle (2) formant âme est une tôle de cuivre.

6. Elément en une substance qui se dilate pour thermostat suivant l'une des revendications précédentes, **caractérisé en ce que** le récipient (1) pour la substance qui se dilate et la tôle (2) formant âme sont coniques.
